# EUROPEAN PATENT SPECIFICATION

(11) **EP 1 485 677 B1**
(45) Date of publication and mention of the grant of the patent: **10.05.2006**
(21) Application number: 02714394.0
(22) Date of filing: 25.03.2002
(51) Int. Cl.: G01B 17/08, G01V 1/38, G01S 15/89

(54) **CLASSIFYING SEAFLOOR ROUGHNESS WITH SOM AND LVQ**
KLASSIFIZIEREN VON MEERESBODEN RAUHIGKEIT MIT SOM UND LVQ
CLASSIFICATION DE LA RUGOSITE DU PLANCHER OCEANIQUE PAR SOM ET LVQ

(43) Date of publication of application: 15.12.2004
(73) Proprietor: COUNCIL OF SCIENTIFIC AND INDUSTRIAL RESEARCH, New Delhi 110 001 (IN)
(72) Inventor: CHAKRABORTY, Bishwajit, Dona Paula, Goa 403 004 (IN); KODAGALI, Vijay, Dona Paula, Goa 403 004 (IN); BARACHO, Jennifer, Dona Paula, Goa 403 004 (IN); JOSEPH, Anthony, Dona Paula, Goa 403 004 (IN)
(74) Representative: Hibbert, Juliet Jane Grace
(86) International application number: PCT/IB2002/001073
(87) International publication number: WO 2003/081172

(56) References cited:
- US-A- 5 606 533
- B.CHAKRABORTY ET AL.: "Acoustic Seafloor Sediment Classification Using Self-Organizing Feature Maps" IEEE TRANSACTIONS ON GEOSCIENCE AND REMOTE SENSING, vol. 39, no. 12, 1 December 2001 (2001-12-01), pages 2722-2725, XP001080192 cited in the application
- B.CHAKRABORTY ET AL.: "Seabottom Characterization Using Multibeam Echosounder Angular Backscatter" IEEE TANSACTIONS ON GEOSCIENCE AND REMOTE SENSING, vol. 38, no. 5, 1 September 2000 (2000-09-01), pages 2419-2422, XP001080005 cited in the application

## Description

### TECHNICAL FIELD

The present invention relates to a system for classifying seafloor roughness using artificial neural network (ANN) hybrid layout from unprocessed multi-beam backscatter data. More particularly, the present invention relates to a system for online seafloor roughness classification from unprocessed multi-beam angular backscatter data using unsupervised learning as a pre-processor and supervised learning as the concluding block for improved classification, resulting in a highly efficient hybrid neural network layout to classify an unclassified dataset.

### BACKGROUND ART

Hitherto known neural classifier for seafloor classification [Z. Michalopoulou, D. Alexandrou, and C. de Moustier, "Application of Neural and Statistical Classifiers to the Problem of Seafloor Characterization", *IEEE Journal of Oceanic Engineering,* Vol. 20, pp. 190-197 (1994)] describes a self-organizing map (SOM) network that is applied to multi-beam backscatter dataset. The drawback of this system is that it can use only processed data. Another drawback is its unsuitability for on-line application.

An alternate system [B. Chakraborty, R. Kaustubha, A. Hegde, A. Pereira, "Acoustic Seafloor Sediment Classification Using Self Organizing Feature Maps", *IEEE Transactions Geoscience and Remote Sensing,* Vol. 39, No. 12, pp. 2722-2725 (2001)] describes a SOM network wherein single-beam dataset is used for seafloor classification, and this system is more suited to online use. However, a limitation of this system is that it requires pre-processing of the time-series dataset prior to classification.
In US Patent Application No. 09/814,104 the Applicants have described a system which is incorporated in seafloor classification. This system described in this application estimates the seafloor acoustic backscattering strength with recorded root-mean-square (r.m.s) echo-voltage and the signal duration for each beam. In this system, multi-beam angular backscatter data have been acquired from the various seafloor areas around the Indian Ocean using a multi-beam acoustic system (Hydrosweep) installed onboard the Ocean Research Vessel Sagar Kanya. A drawback of the aforesaid system is that it requires large time-overhead to correct the raw data for range-related gain, seafloor slope correction, and insonification-depth normalization.

Yet another system [B. Chakraborty, H.W. Schenke, V. Kodagali, and R. Hagen, "Seabottom Characterization Using Multi-beam Echo-sounder: An Application of the Composite Roughness Theory", *IEEE Transactions Geoscience and Remote Sensing.* Vol. 38, pp.2419-2422 (2000)] describes a system for seafloor classification, wherein it has been observed that the seafloor roughness parameters (power-law parameters) are the ideal parameters for classification. The drawback of this system is that seafloor classification can be implemented only after carrying out physical modeling of composite roughness parameters.

### OBJECTS OF THE INVENTION

The main object of the present invention is to provide a novel system for seafloor classification using artificial neural network (ANN) hybrid layout with the use of unprocessed multi-beam backscatter data.

Another object of the present invention is to provide a system for on-line (i.e., real-time) seafloor classification using backscatter data after training the self-organized mapping (SOM) network and learning vector quantization (LVQ) network.

Yet another object of the present invention is to provides a system that incorporates a hybrid network using unsupervised SOM as the first block for coarse classification of the seafloor backscatter data and supervised LVQ for highly improved performance in the said classification.

Still another object of the present invention is to provide a system which incorporates a combination of two variations of the LVQ layout to work together to achieve the best classification results.

### SUMMARY OF THE INVENTION

The present invention relates to a system for classifying seafloor roughness using artificial neural network (ANN) hybrid layout from unprocessed multi-beam backscatter data. More particularly, the present invention relates to a system for online seafloor roughness classification from unprocessed multi-beam angular backscatter data using unsupervised learning as a pre-processor and supervised learning as the concluding block for improved classification, resulting in a highly efficient hybrid neural network layout to classify an unclassified dataset.

### DETAILED DESCRIPTION OF THE INVENTION

Accordingly, the present invention provides a system for classifying seafloor roughness using artificial neural network (ANN) hybrid layout from unprocessed multi-beam backscatter data, said system comprising a means for generating unprocessed multi-beam backscatter r.m.s. data attached to the input of a self-organizing map (SOM) preprocessor (20), said SOM preprocessor being attached through one or more Learning Vector Quantization (LVQ) variants (21 and 23) to a memory/display module (22).

In an embodiment of the present invention, the means for generating unprocessed multi-beam backscatter r.m.s. data comprises a multi-beam acoustic device mounted beneath a ship's hull and attached to an r.m.s. estimator module through a beam former module.

In another embodiment of the present invention, the multi-beam acoustic device comprises a linear array of transducers connected to a roll-pitch-heave sensor through cable connection boxes and an array of transmit-receive systems.

In yet another embodiment of the present invention, the multi-beam acoustic device comprises of two identical arrays of acoustic transducers mounted at right angles to each other.

In still another embodiment of the present invention, each array of the acoustic transducer is a combination of several sub-arrays and each sub array consists of multitude of elements.

In a further embodiment of the present invention, each element form a set of channels.

In one more embodiment of the present invention, the arrays can be used either for transmission or for reception of signals.

In one another embodiment of the present invention, the multi-beam acoustic device is connected to the beam former module through a preamplifier and a time varying gain adjustment circuit.

In an embodiment of the present invention, beam forming is accomplished using appropriate delays.

In another embodiment of the present invention, the beam former module is connected to the r.m.s. estimator module through a digital to analog converter, a filter, and a analog to digital converter.

In still another embodiment of the present invention, a display means is optionally connected to the analog to digital converter.

In yet another embodiment of the present invention, the display means is connected to the analog to digital converter through a bottom-tracking gate.

In a further embodiment of the present invention, the output pattern of the r.m.s. estimator module is the envelope of the r.m.s. signal amplitude Vs. beam number in cross-track direction.

In one more embodiment of the present invention, self-organizing map (SOM) preprocessor classifies the seafloor data into various roughness types and clusters them.

In one another embodiment of the present invention, the roughness parameters are distinguished based on the ship's cross-track angular multi-beam signal backscatter shape parameter.

In an embodiment of the present invention, each cluster formed represents an unique pattern of the input data.

In another embodiment of the present invention, the number of clusters thus formed is equal to the number of differing patterns of received seafloor data set.

In yet another embodiment of the present invention, the clusters are formed with the inherent unsupervised learning feature of the SOM preprocessor.

In still another embodiment of the present invention, the clusters are formed without any prior knowledge of the number of the different types of input patterns.

In a further embodiment of the present invention, the Learning Vector Quantization (LVQ) variant overcomes the imperfection in classification arising from the process of unsupervised classification done by SOM preprocessor.

In one more embodiment of the present invention, the improvements seafloor classification is achieved by supervised learning.

In one another embodiment of the present invention, the supervised learning is imparted to the LVQ by a human interpreter based on the ground truth data set.

In an embodiment of the present invention, said system incorporates a LVQ designed to avoid misclassification at the central portion of the weight-distribution of each cluster or a LVQ designed to distinguish the overlapping tails of the weight distribution of adjacent clusters or a combination of both.

In another embodiment of the present invention, the LVQ designed to avoid misclassification at the central portion is based on "reward-punishment" criterion.

In yet another embodiment of the present invention, the LVQ moves the weight-vector from the input if it is wrongly represented and the weight-vector is made to match the input more closely if its correctly represented.

In still another embodiment of the present invention, the LVQ designed to distinguish the overlapping of tails employs the technique of redistribution of the weights of the overlapping portion of the adjacent clusters to the respective parent clusters.

In one more embodiment of the present invention, human interpreter can make use of the results displayed on the display device to make further judgements on the quality of classification.

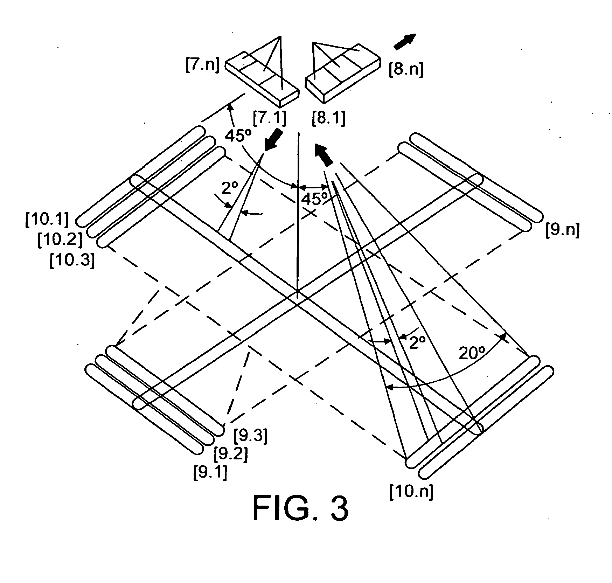

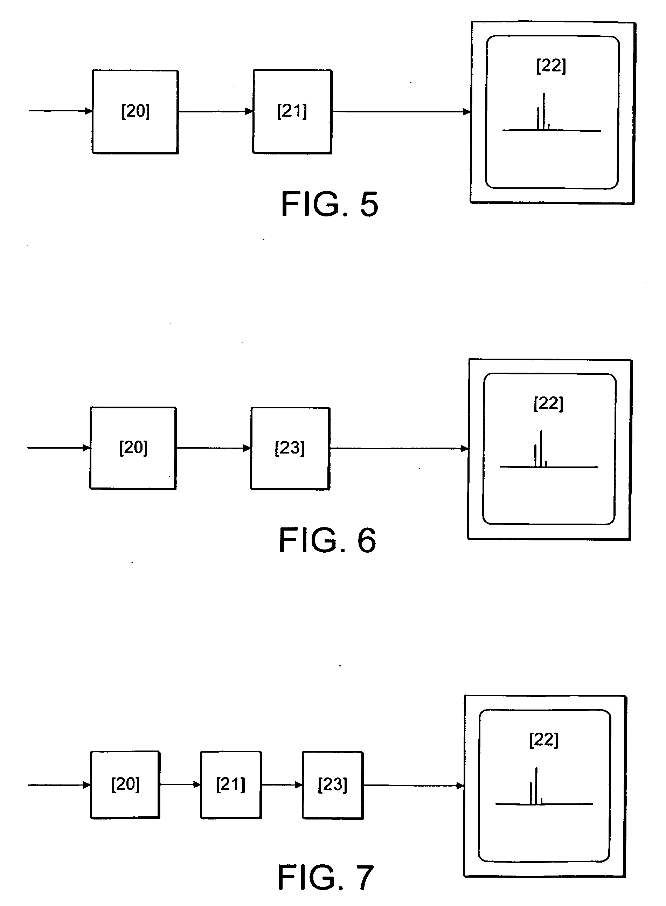

The present invention more preferably provides a novel system for seafloor classification using artificial neural network (ANN) hybrid layout with the use of unprocessed multi-beam backscatter data, which comprises of an artificial neural network system that consists of a self-organizing map (SOM) preprocessor [20], learning vector quantization variants LVQ1 [21] and LVQ2 [23], and the memory/display module [22], wherein the input to the said SOM network [20] is derived from the output of an r.m.s. estimator module [19], which received its input from an A/D converter [16], which in turn acquired its input from a beam-former [13] attached to two identical perpendicularly oriented arrays [7] and [8] of a multi-beam acoustic device of Fig. 3, the said signal after having been rendered into analog format and filtered with the use of appropriate electronic hardware circuitry [14] and [15] respectively; the said SOM network [20] receiving the unprocessed multi-beam backscatter r.m.s data derived from the different pre-formed beams, and classifying the seafloor data into various roughness types that are distinguished based on the ship's cross-track angular multi-beam signal backscatter shape parameter, wherein a unique cluster is formed to represent a specific pattern of the input data; the number of clusters thus formed being equal to the number of differing patterns of the received seafloor data set; the said clusters having been formed without any prior knowledge of the number of different types of input patterns; the said clusters of data set being subsequently input to the LVQ1 [21]; the imperfection in classification arising from the process of unsupervised learning without any background knowledge being partially overcome by the LVQ1 network [21] as in Fig. 5; the said improvement in seafloor classification achievable by supervised learning based on the feedback provided to the said LVQ1 network [21] by the human interpreter based on the ground truth data set using an appropriate weight-updating criterion, with a correctly-representing weight-vector having been made to match the input more strongly, while a wrongly-representing weight-vector having been moved away from the input, so as to avoid misclassification at the central portion of the weight-distribution of each cluster; the outputs of the said LVQ1 [21] being subsequently input to the memory and display module [22], wherein the results thereby displayed having the utility for human interpretation to be made to enhance the quality of classification; the system of the present invention having the capability to incorporate an alternate hybrid layout wherein the LVQ1 [21] module could be replaced by another supervisable module LVQ2 [23] as in Fig. 6 that performs the alternate function of distinguishing the overlapping tails of the weight distribution of adjacent clusters to implement seafloor classification with minimal error; said system having additional capability to incorporate an improved hybrid layout, the said layout having the advantage of implementing seafloor classification based on the differing abilities of LVQ1 [21] and LVQ2 [23] as in Fig. 7, thereby providing the best possible classification, taking into account the central as well as tail portions of the weight distributions in the process of classification.

In an embodiment of the present invention, the neural network layout is a model-independent system that would provides the capability to the use of unprocessed backscatter data from the seafloor for the purpose of classification.

In another embodiment of the present invention, online seafloor classification is possible subsequent to the training phase of the network, thereby providing a cost-effective system having the capability to circumvent the need for pre-processing of the raw data.

In yet another embodiment of the present invention, a one-dimensional (i.e., bar-plot) presentation of a multitude of self-organized clusters of unprocessed (i.e., raw) input dataset and subsequent classification are provided to the human interpreter for further judgment of the quality of classification, and additional capability of visualization of the received input vectors in real time.
In still another embodiment of the present invention, said capabilities are extendable to the processed backscatter data as well.

In a further embodiment of the present invention, said system is capable of real-time redirecting cross-track multi-beam angular backscatter data received from the echo-sounder installed onboard the ship/AUV, to a remote databank.

In one more embodiment of the present invention, said redirection is carried out by representation of an extensive dataset by a few clustering units as formed in the said system layout on a ping-by-ping basis.

### NOVELTY AND INVENTIVE STEP

The novelty and inventive step of the present invention provides for an ingenious system for seafloor classification using artificial neural network (ANN) hybrid layout with the use of unprocessed multi-beam backscatter data, thereby circumventing the need for the conventional laborious and time-consuming preprocessing task that would have been required otherwise. The system of the present invention allows on-line (i.e., real-time) seafloor classification using backscatter data after training the self-organized mapping (SOM) network and learning vector quantization (LVQ) network. Further, the system of the present invention has the unique capability for the combined application of unsupervised SOM followed by supervised LVQ to achieve a highly improved performance in the said classification, which is hitherto non-existent. The system of the present invention has the additional capability for the use of a combination of the two variations of the LVQ layout to work together to achieve the best results in seafloor classification.

The novel system for seafloor classification using artificial neural network (ANN) hybrid layout provides:
1. The capability of using unprocessed multi-beam backscatter data, thereby circumventing the need for the conventional laborious and time-consuming preprocessing task that would have been required otherwise.
2. The ability for on-line (i.e., real-time) seafloor classification after training the self-organized mapping (SOM) network and learning vector quantization (LVQ) network using a large time-series dataset in the absence of background information.
3. The unique capacity for the combined use of unsupervised SOM followed by supervised LVQ to achieve a highly improved performance in the said seafloor classification, which is hitherto non-existent.
4. The means for the use of a combination of the two variants of the LVQ layout, namely LVQ1 (that minimizes misclassification) and LVQ2 (that adjusts overlapping weights of adjacent clusters), to operate together to achieve the best results in seafloor classification.

### BRIEF DESCRIPTION OF THE ACCOMPANYING DRAWINGS

In the drawings accompanying this specification:
Fig. 1 represents the schematic of a single-beam echo-sounder conventionally used for seafloor mapping.
Fig. 2 shows the schematic of a multi-beam echo-sounder used for seafloor mapping over a larger area with the use of an array of acoustic beams:
Fig. 3 indicates the geometry used in multi-beam echo-sounder for collection of acoustic backscatter data from the seafloor.
Fig. 4 presents a block schematic of the signal processing hardware used for beam-forming of the backscattered signal stream.
Fig. 5 represents the schematic block diagram of the hybrid ANN layout using SOM as the preprocessor and LVQ1 for improved classification.
Fig. 6 indicates the block schematic of an alternate hybrid ANN layout using SOM network followed by LVQ2 for fine-tuning of cluster boundaries.
Fig. 7 shows the schematic block diagram of the optimum hybrid network layout of SOM, LVQ1, and LVQ2 to achieve the best results of seafloor classification.
Fig. 8 illustrates the clustering of the unprocessed data vectors presented to the SOM network to achieve improved classification results using the supervised learning features of LVQ1 and LVQ2 both independently and combined.
Fig. 9 shows the Table of seafloor classification results based on SOM, LVQ1, and LVQ2 layouts.

The present invention will now be described in detail with reference to the accompanying drawings which are given for explaining the present invention in a more clear manner and therefore should not be construed to limit the scope of the present invention in any manner.

### DETAILED DESCRIPTION OF THE PREFERRED EMBODIMENTS

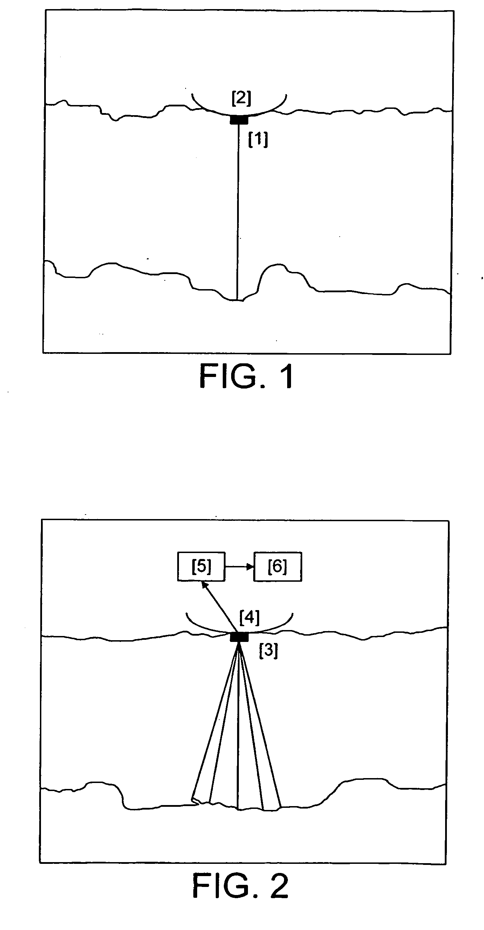

Fig. 1 represents the schematic of a single-beam echo-sounder, wherein an acoustic transducer [1] mounted beneath a survey ship [2] transmits acoustic pulses to the seafloor in a direction perpendicular to the sea surface and receives the echo that is backscattered from the seafloor. As the ship moves along a given preplanned track, a stream of successive echoes backscattered from the consecutive segments on the seafloor are received by an onboard receiver hardware and are recorded in its data memory module as a time-series dataset. A drawback of this single-beam echo-sounder is that the seafloor area coverage achievable in this manner is limited to the footprint of a single acoustic beam that impinges on the seafloor.

Fig. 2 shows the schematic of a multi-beam echo-sounder [3] that is used for simultaneous seafloor mapping over large areas. In this geometry, the transducers are spaced in such a way that overlapping seafloor coverage is obtained. The fan-beam acoustic system consists of a linear array of transducers mounted beneath the ship's hull [4]. This fan-beam echo-sounder system consists essentially of two main sub-systems, namely, acoustic sub-system [5] and data processing sub-system [6]. The acoustic sub-system comprises of a linear array of transducers installed at a certain suitable angular separation, cable-connection boxes, an array of transmit-receive systems for the respective transducer array, and usually a roll-pitch-heave sensor for input to the online processing system. The data-processing control system employs a shipboard computer, data-storage devices, and so forth. The multi-beam echo-sounder is a device that provides higher resolution seabed mapping. This system is capable of achieving a greater coverage as well as generating a high-precision map. The use of multi-beam echo-sounding system results in the generation of seafloor profiles, which are correlated with respect to the single central track, and allows more reliable correlation of intersecting tracks.

Fig.3 represents a schematic of the beam configuration of the multi-beam echo-sounder used as part of the novel system of the present invention for seafloor classification using artificial neural network (ANN) hybrid layout with the use of unprocessed multi-beam backscatter data, which consists primarily of two identical arrays [7] and [8] of acoustic transducers mounted at right angles to each other. Each array is a combination of several sub-arrays [7.1],...[7.n] and [8.1],....[8.n] respectively, each consisting of a multitude of elements. These elements form a set of channels [9.1], [9.2], .... [9.n], each channel consisting of a group of elements in series. Similarly, for other counterpart transducer array, the receiving channels are [10.1], [10.2],....[10.n]. Because both the arrays are identical, they can be used for either transmission or reception. In the receiving mode, signals from the different channels are pre-amplified, corrected for attenuation, and thereafter beam-forming is performed using appropriate delays. Altogether, a fixed number of pre-formed beams (p.f.b) are formed within the 90° swath. The beams are equally spaced (~1.5°), average beam-widths varying from 1.5° to 2.3° for deep-water surveys. The half-power beam-width becomes approximately double when the system is operated in shallow water mode. The beam-formed outputs are tapped at the bottom-echo module to estimate the depth corresponding to the beams from different directions. In order to achieve uniform insonification over a swath of 90°, the system is designed to operate in a swath mode.

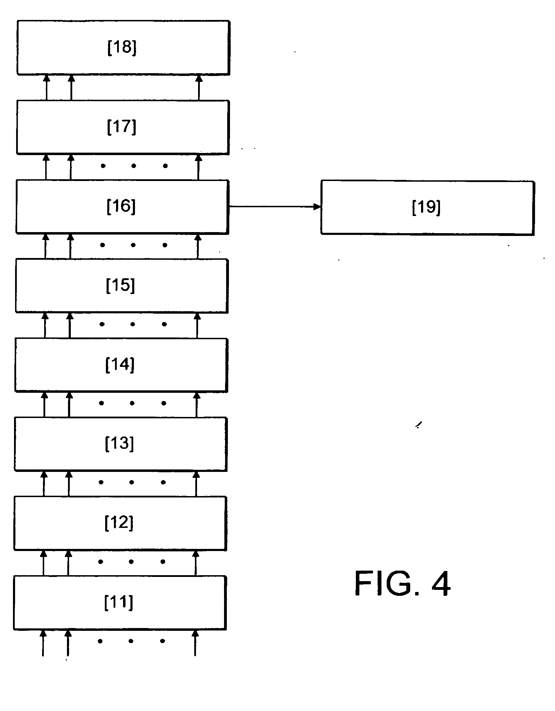

Fig. 4 illustrates the block schematic of the signal processing hardware used for beam-forming of the backscattered signal stream, which consists primarily of a pre-amplifier [11], time-varying gain adjustment circuitry [12], beam-former [13], digital-to-analog converter [14], filter [15], analog-to-digital (A/D) converter [16], bottom tracking gate [17], and display [18]. The digital data used for seafloor classification are derived from the output channel of the A/D converter [16]. This signal is input to an r.m.s. estimator module [19], whose outputs are used as the input vectors for further processing.

Fig. 5 represents the schematic block diagram of the hybrid ANN layout used in the system of the present invention. This layout consists of a self-organizing map (SOM) network [20], learning vector quantization variant 1 (LVQ1) [21], and the memory/display module [22]. The input to the said SOM network [20] is derived from the output of the r.m.s. estimator module [19]. In the system of the present invention, the said SOM network [20] receives the unprocessed multi-beam backscatter r.m.s. data (whose pattern is the envelope of the r.m.s. signal amplitude versus beam number in the cross-track direction) obtained from the different pre-formed beams, and classifies the seafloor data into various roughness types. The different roughness types are distinguished based on the ship's cross-track angular multi-beam signal backscatter shape parameter. Each cluster so formed represents a unique pattern of the input data. Accordingly, the number of clusters formed is equal to the number of differing patterns of the received seafloor data set. These clusters are formed with the inherent unsupervised learning feature of the SOM network without any prior knowledge of the number of different types of input patterns. The clusters of the data set so formed by the SOM [20] are input to the LVQ1 [21]. The imperfection in classification, which is inherent in the said SOM network [20] due to the nature of unsupervised learning without any background knowledge (of the input data types), is partially overcome by the LVQ1 network [21]. This improvement in seafloor classification results from the supervised learning based on the feedback provided to the said LVQ1 network [21] by the human interpreter, judging from the ground truth data set. The said improvement is based on the "reward-punishment" criterion, wherein a correctly representing weight-vector is made to match the input more strongly, while a wrongly representing weight-vector is moved away from the input, so that it will avoid misclassification in future comparisons. The said LVQ1 [21] works more efficiently at the central portion of the weight distribution of each cluster formed in the SOM [20] than at the tail portion of the said distribution because of the inability of the said LVQ1 [21] to distinguish the overlapping tails of adjacent clusters. The outputs of the said LVQ1 [21] are subsequently input to the memory and display module [22], wherein the human interpreter can make use of the results that are thereby displayed to make further judgments on the quality of classification.

Fig. 6 shows the schematic block diagram of an alternate hybrid ANN layout used in the system of the present invention together with the layout shown in Fig. 5. This layout is similar to the one given in Fig. 5, the only difference being that while the LVQ1 [21] avoids misclassification to a greater extent at the central portion of the weight distribution of each cluster formed in SOM [20] than at the tail portion of the said distribution, the LVQ2 network focuses on minimizing misclassification (arising in SOM) as a result of its ability to distinguish the overlapping tails of the weight distribution of adjacent clusters. The said LVQ2 [23] employs a technique for redistribution of the weights of the overlapping portions of the adjacent clusters to the respective parent clusters. The outputs of the said LVQ2 [23] are subsequently input to the memory and display module [22], wherein the results are displayed and stored to enable the human interpreter to make further judgments on the quality of classification.

Fig. 7 illustrates the schematic block diagram of an improved hybrid ANN layout used in the system of the present invention together with the layout shown in Figs. 5 & 6. This layout has the advantage of implementing seafloor classification based on the differing abilities of LVQ1 [21] and LVQ2 [23], thereby providing the best possible classification, taking into account the central as well as the tail portions of the weight distributions in the process of classification.

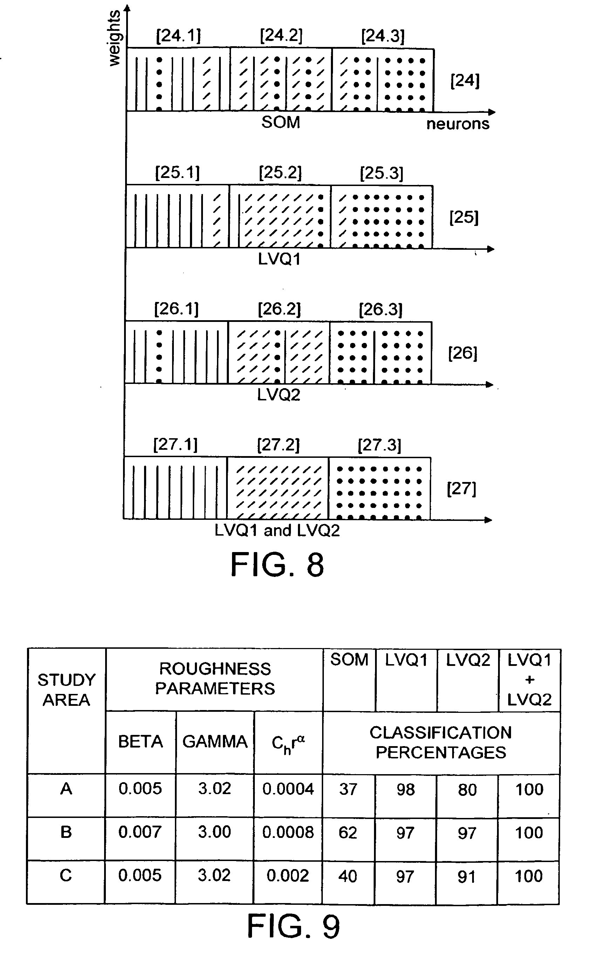

Fig. 8 illustrates the clustering of the unprocessed data vectors presented to the aforesaid SOM network [20] and the supervised learning features of LVQ [21] and LVQ2 [23], both independently and combined. In this illustration, two weight-vectors located on either side of the boundary (shown as thick vertical line) have been designated as lying within the overlapping region of adjacent clusters. In the illustration of Fig. 8, the segments [24.1], [24.2], and [24.3] represent three consecutive weight-distribution-patterns [24] formed by the unsupervised SOM [20], wherein the symbols (•), (|), and (/) indicate three different classes of seafloor roughness parameters. As a representative example, the weight-distribution-pattern [25] at the output of the supervised architecture LVQ1 [21] clearly indicates the removal of the central misclassified portions (•) of [24.1] and [24.2], and their redeployment into the parent cluster represented by the segment [24.3], thereby providing a better redistribution in segments [25.1], [25.2], and [25.3] of the full weight-distribution-pattern [25]. The weight-distribution-pattern [26] illustrates the effectiveness of the supervised layout LVQ2 [23] wherein the segments [26.1], [26.2], and [26.3] indicate the removal of the misclassified data vector (/) from the tail portions of [24.1] and [24.3] of the SOM-output [24] and their redeployment into its parent segment [24.2] as shown in [26], while ignoring the classification error in the central portions of the weight-distribution-pattern in [26.1] indicated by (•). The weight-distribution-pattern [27] illustrates the effectiveness of classification with the combined use of LVQ1 [21] and LVQ2 [23] wherein the misclassifications found in both the central and tail portions of [24] are corrected to provide a fully corrected weight-distribution-pattern [27].

Fig.9 shows a Table of roughness parameters and classification results (in percentage) for three seafloor areas examined using LVQ1, LVQ2 and a combination of both the above supervised layouts, using SOM as the preprocessor in each case.

Generally, in the Hydrosweep multibeam echosounding system, the two outer beam values on the port side and the starboard side are erroneous and are neglected. Consequently, the original 59 beam input vector becomes an array of 55 beam values from angle -45° to +45°. In this embodiment, each of the 55 beam values for 5 input vectors at a time is averaged for input vector smoothening. By reducing variations in input patterns from the same seafloor region, we obtain marginally improved classification performance albeit at the cost of computational time.

The preprocessor block uses unsupervised learning to form a self- organised mapping of 100 input vectors from various seafloors. The input data vectors are converted from the decibel scale to their natural values. Each vector is then normalised to match the range of the weights. The data is still unprocessed in the sense that no preprocessing algorithm (PROBASI) has been applied to it. From each seafloor area, a representative backscatter data set is chosen for training the SOM network. In this architecture, neighbouring entities called neurons compete with each other by the mutual lateral interaction of their weights. The weights in the neighbourhood of the closest matching neuron to the input vector presented are updated from an initial random distribution, so as to bring them closer to this input vector. This leads to the formation of local neighbourhoods, depicting a particular class. The learning rate is an exponentially decaying function 0.5/(t^{0.2}) where t is the number of iterations, thus causing the rate of weight updating to be initially high and subsequently decreases gradually for finer tuning in successive iterations, until ultimately only one neuron excites in response to an input presented. At the end of execution of the SOM algorithm, the input space arranges into coarse clusters, each representing a unique input pattern, without any *a priori* information. Future input vectors presented in the testing phase are assigned to a cluster in the output space that best matches the input vector. The power law parameters (gamma and beta) for the different seafloor regions, obtained by physical modeling, are used to correlate the obtained results. The trained weight matrix after employing the SOM network are used as the inputs for a supervised learning network, namely LVQ. Here, training and testing is carried out simultaneously for a few iterations until the network weights belonging to each cluster are truly representative of that cluster. The learning rate is still exponential but with a much smaller initial value to allow fine tuning of neuron weights. In LVQ1, with user control for 3-4 input vectors from each class, the erroneously classifying weight vector is moved away from the input. If classification is correct, the weight vector is strengthened towards the input and eventually misclassification is avoided in further testing. LVQ2 goes a step further in overcoming the overlapping weight biases in regions of crossover of adjacent clusters by applying the window function at their boundary for correction to 1-2 neurons. The window is divided into half and corrections are made only when the excited neuron falls on the wrong side of the mid-plane by moving that vector away from the input and simultaneously bringing the neuron on the correct half of the window closer to it. A plot is made of probability density function (pdf) of excited neuron versus the frequency of excitation.

In particular, we used three seafloor regions A, B and C for our comparative study. The classification results are tabulated in Fig. 9 for SOM, LVQ1 and LVQ2 for unprocessed backscatter data. On comparing the tabulated power law parameters (gamma and beta), acting as an indicator of seafloor interface roughness, with self-organized clusters after training by SOM, we have notice that areas A and C are of the same seafloor type. Between the two, classification results have indicated enhanced performance with LVQ for area C, which is rougher as indicated by its higher Cₕr^{α} value (rms roughness between two points separated by a distance of 100 m). The most significant contribution of this invention is the ability of the network to give superior response to unprocessed data, thereby eliminating the need for tedious preprocessing of the multi-beam backscatter data for seafloor roughness theory, thereby providing online indication of roughness even using raw data.

### ADVANTAGES OF THE PRESENT INVENTION

The main advantages of the present invention are:
1. It provides the capability for combined use of the two variants of the learning vector quantization (LVQ) network to achieve the best classification of the seafloor characteristics, which is a capability that is hitherto non-existent.
2. It provides a self-organization of multi-beam input data vectors into coarse clusters in the output space without any *a priori* information.
3. It provides the capability to the use of raw dataset as input vectors to the classification network.
4. It reduces computational time overhead, which is a capability that is not available with hitherto known physical models.
5. It provides a means for online seafloor classification using raw backscatter data subsequent to suitable training of the network.
6. It provides for high network performance by its ability for the successive application of a duality of means for avoidance of misclassification and the capability for recovery of overlapped information.
7. It allows for the capability for easy and real-time transmission of remote data received by the echo-sounder onboard the ship/autonomous underwater vehicle (AUV), to the remote databank; the said transmission having been carried out by the representation of an entire dataset of cross-track multi-beam angular backscatter information by a few clustering units formed in the said system on a ping-by-ping basis.

## Claims

1. A system for classifying seafloor roughness using artificial neural network (ANN) hybrid layout from unprocessed multi-beam backscatter data, said system comprising a means for generating unprocessed acoustic multi-beam backscatter r.m.s. data attached to the input of a self-organizing map (SOM) preprocessor (20), said SOM preprocessor being attached through one or more Learning Vector Quantization (LVQ) networks (21 and 23) to a memory/display module (22).

2. A system as claimed in claim 1, wherein the means for generating unprocessed multi-beam backscatter r.m.s. data comprises a multi-beam acoustic device mounted beneath a ship's hull and attached to an r.m.s. estimator module through a beam former module.

3. A system as claimed in claim 2, wherein the multi-beam acoustic device comprises a linear array of transducers connected to a roll-pitch-heave sensor through cable connection boxes and an array of transmit-receive systems.

4. A system as claimed in claim 3, wherein the multi-beam acoustic device comprises of two identical arrays of acoustic transducers mounted at right angles to each other.

5. A system as claimed in claim 4, wherein each array of the acoustic transducer is a combination of several sub-arrays and each sub array consists of multitude of elements.

6. A system as claimed in claim 5, wherein each element form a set of channels.

7. A system as claimed in claim 4, wherein the arrays can be used either for transmission or for reception of signals.

8. A system as claimed in claim 2, wherein the multi-beam acoustic device is connected to the beam former module through a preamplifier and a time varying gain adjustment circuit.

9. A system as claimed in claim 2, wherein beam forming is accomplished using appropriate delays.

10. A system as claimed in claim 2, wherein the beam former module is connected to the r.m.s. estimator module through a digital to analog converter, a filter, and a analog to digital converter.

11. A system as claimed in claim 10, wherein a display means is optionally connected to the analog to digital converter.

12. A system as claimed in claim 11, wherein the display means is connected to the analog to digital converter through a bottom-tracking gate.

13. A system as claimed in claim 1, wherein the output pattern of the r.m.s. estimator module is the envelope of the r.m.s. signal amplitude Vs, beam number in cross-track direction.

14. A system as claimed in claim 1, wherein self-organizing map (SOM) preprocessor classifies the seafloor data into various roughness types and clusters them.

15. A system as claimed in claim 14, wherein he roughness parameters are distinguished based on the ship's cross-track angular multi-beam signal backscatter shape parameter.

16. A system as claimed in claim 14, wherein each cluster formed represents an unique pattern of the input data.

17. A system as claimed in claim 14, wherein the number of clusters thus formed is equal to the number of differing patterns of received seafloor data set.

18. A system as claimed in claim 14, wherein the clusters are formed with the inherent unsupervised learning feature of the SOM preprocessor.

19. A system as claimed in claim 14, wherein the clusters are formed without any prior knowledge of the number of the different types of input patterns.

20. A system as claimed in claim 1, wherein the Learning Vector Quantization (LVQ) variant overcomes the imperfection in classification arising from the process of unsupervised classification done by SOM preprocessor.

21. A system as claimed in claim 20, wherein the improvements seafloor classification is achieved by supervised learning.

22. A system as claimed in claim 21, wherein the supervised learning is imparted to the LVQ by a human interpreter based on the ground truth data set.

23. A system as claimed in claim 1, wherein said system incorporates a LVQ designed to avoid misclassification at the central portion of the weight-distribution of each cluster or a LVQ designed to distinguish the overlapping tails of the weight distribution of adjacent clusters or a combination of both.

24. A system as claimed in claim 23, wherein the LVQ designed to avoid misclassification at the central portion is based on "reward-punishment" criterion.

25. A system as claimed in claim 24, wherein the LVQnmoves the weight-vector from the input if it is wrongly represented and the weight-vector is made to match the input more closely if its correctly represented.

26. A system as claimed in claim 23, wherein the LVQ designed to distinguish the overlapping of tails employs the technique of redistribution of the weights of the overlapping portion of the adjacent clusters to the respective parent clusters.

27. A system as claimed in claim 1, wherein a human interpreter can make use of the results displayed on the display device to make further judgements on the quality of classification.

28. A system as claimed in Claim 1, wherein the artificial neural network hybrid layout consists of the self-organizing map (SOM) preprocessor [20], learning vector quantization variants LVQ1 [21] and LVQ2 [23], and the memory/display module [22], wherein the input to the said SOM network [20] is derived from an output of an r.m.s. estimator module [19], which received its input from an A/D converter [16], which in turn acquired its input from a beam-former [13] attached to two identical perpendicularly oriented arrays [7] and [8] of a multi-beam acoustic device, the said signal after having been rendered into analog format and filtered with the use of appropriate electronic hardware circuitry [14] and [15] respectively; the said SOM network [20] receiving the unprocessed multi-beam backscatter r.m.s data derived from the different pre-formed beams, and classifying the seafloor data into various roughness types that are distinguished based on the ship's cross-track angular multi-beam signal backscatter shape parameter, wherein a unique cluster is formed to represent a specific pattern of the input data; the number of clusters thus formed being equal to the number of differing patterns of the received seafloor data set; the said clusters having been formed without any prior knowledge of the number of different types of input patterns; the said clusters of data set being subsequently input to the LVQ1 [21]; the imperfection in classification arising from the process of unsupervised learning without any background knowledge being partially overcome by the LVQ1 network [21]; the said improvement in seafloor classification achievable by supervised learning based on the feedback provided to the said LVQ1 network [21] by the human interpreter based on the ground truth data set using an appropriate weight-updating criterion, with a correctly-representing weight-vector having been made to match the input more strongly, while a wrongly-representing weight-vector having been moved away from the input, so as to avoid misclassification at the central portion of the weight-distribution of each cluster; the outputs of the said LVQ1 [21] being subsequently input to the memory and display module [22], wherein the results thereby displayed having the utility for human interpretation to be made to enhance the quality of classification; the system of the present invention having the capability to incorporate an alternate hybrid layout wherein the LVQ1 [21] module could be replaced by another supervisable module LVQ2 [23] that performs the alternate function of distinguishing the overlapping tails of the weight distribution of adjacent clusters to implement seafloor classification with minimal error; said system having additional capability to incorporate an improved hybrid layout, the said layout having the advantage of implementing seafloor classification based on the differing abilities of LVQ1 [21] and LVQ2 [23], thereby providing the best possible classification, taking into account the central as well as tail portions of the weight distributions in the process of classification.

29. A system as claimed in claim 1, wherein the neural network layout is a model-independent system that would provide the capability to the use of unprocessed backscatter data from the seafloor for the purpose of classification.

30. A system as claimed in claim 1, wherein online seafloor classification is possible subsequent to the training phase of the network, thereby providing a cost-effective system having the capability to circumvent the need for pre-processing of the raw data.

31. A system as claimed in claim 1, wherein a one-dimensional (i.e., bar-plot) presentation of a multitude of self-organized clusters of unprocessed (i.e., raw) input dataset and subsequent classification are provided to the human interpreter for further judgment of the quality of classification, and additional capability of visualization of the received input vectors in real time.

32. A system as claimed in claim 1, wherein said capabilities are extendable to the processed backscatter data as well.

33. A system as claimed in claim 1, wherein said system is capable of real-time redirecting cross-track multi-beam angular backscatter data received from the echo-sounder installed onboard the ship/AUV, to a remote databank.

34. A system as claimed in claim 32, wherein said redirection is carried out by representation of an extensive data set by a few clustering units as formed in the said system layout on a ping-by-ping basis.

## Patentansprüche

1. System zum Klassifizieren der Rauigkeit des Meeresbodens unter Verwendung eines Hybrid-Layouts eines künstlichen, neuralen Netzwerks (Artifical Neural Network - ANN) aus unverarbeiteten, Mehrstrahl-Backscatter-Daten, wobei das System eine Einrichtung zum Erzeugen von unverarbeiteten, akustischen, quadratisch gemittelten (r.m.s.) Mehrstrahl-Backscatter-Daten, verbunden mit dem Eingang eines Vorprozessors (20) mit selbst-organisierender Liste (self-organizing map - SOM), wobei der SOM-Vorprozessor über ein oder mehrere Learning-Vector-Quantization-(LVQ)-Netzwerk(e) (21 und 23) mit einem Speicher/Anzeigemodul (22) verbunden ist, aufweist.

2. System nach Anspruch 1, wobei die Mittel zum Erzeugen von unverarbeiteten, quadratisch gemittelten Mehrstrahl-Backscatter-Daten eine Mehrstrahl-Akustik-Vorrichtung, montiert unterhalb eines Schiffsrumpfs und verbunden mit einem Abschätzungsmodul für den quadratischen Mittelwert über ein Strahlformermodul, aufweist.

3. System nach Anspruch 2, wobei die Mehrstrahl-Akustik-Vorrichtung ein lineares Feld aus Wandlern, verbunden mit einem Roll-Pitch-Heave-Sensor (Schlinger-Stampf-Hebe-Sensor) über Kabelverbindungskästen, und ein Feld aus Sende-Empfangs-Systemen aufweist.

4. System nach Anspruch 3, wobei die Mehrstrahl-Akustik-Vorrichtung zwei identische Felder aus akustischen Wandlern, befestigt unter rechten Winkeln zueinander, aufweist.

5. System nach Anspruch 4, wobei jedes Feld des akustischen Wandlers eine Kombination aus mehreren Unterfeldern ist und jedes Unterfeld aus einer Vielzahl von Elementen besteht.

6. System nach Anspruch 5, wobei jedes Element einen Satz von Kanälen bildet.

7. System nach Anspruch 4, wobei die Felder entweder für ein Senden oder für ein Empfangen von Signalen verwendet werden können.

8. System nach Anspruch 2, wobei die Mehrstrahl-Akustik-Vorrichtung mit dem Strahlformermodul über einen Vorverstärker und eine zeitvarüerende Verstärkungseinstellungsschaltung verbunden ist.

9. System nach Anspruch 2, wobei eine Strahlformung unter Verwendung von geeigneten Verzögerungen vorgenommen wird.

10. System nach Anspruch 2, wobei das Strahlformermodul mit dem Abschätzungsmodul für den quadratischen Mittelwert über einen Digital-AnalogWandler, ein Filter und einen Analog-Digital-Wandler verbunden ist.

11. System nach Anspruch 10, wobei die Anzeigeeinrichtung optional mit dem Analog-Digital-Wandler verbunden ist.

12. System nach Anspruch 11, wobei die Anzeigeeinrichtung mit dem Analog-Digital-Wandler über ein Bottom-Tracking-Gate verbunden ist.

13. System nach Anspruch 1, wobei das Ausgangsmuster des Abschätzungsmoduls für den quadratischen Mittelwert eine Einhüllende einer Signalamplitude für den quadratischen Mittelwert gegenüber einer Strahl-Zahl in einer Kursversatz-Richtung ist.

14. System nach Anspruch 1, wobei der Prozessor mit selbst-organisierender Liste (SOM) die Meeresbodendaten in verschiedene Rauigkeits-Typen klassifiziert und sie als Cluster zusammenfügt.

15. System nach Anspruch 14, wobei die Rauigkeitsparameter basierend auf einem Kursversatz-Winkel-Mehrstrahl-Signal-Backscatter-Form-Parameter des Schiffs unterschieden werden.

16. System nach Anspruch 14, wobei jedes Cluster, das gebildet ist, ein eindeutiges Muster der Eingabedaten darstellt.

17. System nach Anspruch 14, wobei die Anzahl von Clustern, die so gebildet ist, gleich zu der Anzahl von unterschiedlichen Mustern eines empfangenen Meeresboden-Datensatzes ist.

18. System nach Anspruch 14, wobei die Cluster mit dem eigenen, nicht überwachten Lernmerkmal des SOM-Vorprozessors gebildet sind.

19. System nach Anspruch 14, wobei die Cluster ohne irgendeine vorherige Kenntnis der Anzahl der unterschiedlichen Typen von Eingabemustem gebildet sind.

20. System nach Anspruch 1, wobei die Leaming-Vector-Quantization-(LVQ)-Variante die Unvollkommenheit bei der Klassifizierung beseitigt, die aus dem Prozess einer nicht überwachten Klassifikation, vorgenommen durch einen SOM-Prozessor, entsteht.

21. System nach Anspruch 20, wobei die Verbesserungen der Meeresboden-Klassifikation durch ein überwachtes Lernen erreicht werden.

22. System nach Anspruch 21, wobei das überwachte Lernen in Bezug auf die LVQ durch eine Interpretation einer Person, basierend auf dem Grund-Wahrheits-Datensatz, vorgenommen wird.

23. System nach Anspruch 1, wobei das System eine LVQ einsetzt, ausgelegt so, um eine Fehlklassifikation an dem zentralen Bereich der Gewichtungs-Verteilung jedes Clusters, oder eine LVQ, ausgelegt so, um die überlappenden Enden der Gewichtungs-Verteilung von angrenzenden Clustern, oder eine Kombination davon, zu unterscheiden, zu vermeiden.

24. System nach Anspruch 23, wobei die LVQ, ausgelegt so, um eine Fehlklassifikation an dem zentralen Bereich zu vermeiden, auf einem "reward-punishment" Kriterium basiert.

25. System nach Anspruch 24, wobei die LVQ den Gewichtungsvektor von der Eingabe, wenn er falsch repräsentiert ist, bewegt, und den Gewichtungsvektor so gestaltet, um die Eingabe enger anzupassen, wenn er korrekt dargestellt ist.

26. System nach Anspruch 23, wobei die LVQ, ausgelegt so, um das Überlappen der Enden zu unterscheiden, die Technik einer Umverteilung der Gewichtungen des überlappenden Bereichs der benachbarten Cluster zu den jeweiligen Haupt-Clustern einsetzt.

27. System nach Anspruch 1, wobei eine Interpretation einer Person von den Ergebnissen, angezeigt auf der Anzeigevorrichtung, Gebrauch machen kann, um weitere Beurteilungen über die Qualität der Klassifikation vorzunehmen.

28. System nach Anspruch 1, wobei das Hybrid-Layout eines künstlichen, neuralen Netzwerks aus dem Prozessor (20) mit selbst-organisierender Liste (SOM), lemenden Vektor-Quantisierungs-Varianten LVQ1 (21) und LVQ2 (23) und dem Speicher-Anzeige-Modul (22) besteht, wobei der Eingang des SOM-Netzwerks (20) von einem Ausgang eines Abschätzungsmoduls (19) für den quadratischen Mittelwert abgeleitet ist, das seinen Eingang von einem A/D-Wandler (19) empfängt, der wiederum seinen Eingang von einem Strahlformer (13), verbunden mit zwei identischen, senkrecht orientierten Feldern (7) und (8) einer Mehrstrahl-Akustik-Vorrichtung, erhält, mit dem Signal, nachdem es zu einem analogen Format gestaltet und unter der Verwendung einer geeigneten, elektronischen Hardware-Schaltung (14) und (15) jeweils gefiltert ist; wobei das SOM-Netzwerk (20) die unverarbeiteten Mehrstrahl-Backscatter-Daten des quadratischen Mittelwerts (r.m.s.), abgeleitet von den unterschiedlichen, vorgeformten Strahlen, empfängt und die Meeresbodendaten in verschiedene Rauigkeits-Typen klassifiziert, die, basierend auf dem Kursversatz-Winkel-Mehrstrahl-Signal-Backscatter-Form-Parameter des Schiffs, unterschieden werden, wobei ein eindeutiger Cluster gebildet wird, um ein spezifisches Muster der Eingangsdaten darzustellen; wobei die Anzahl von Clustern, die so gebildet ist, gleich zu der Anzahl von unterschiedlichen Mustern des empfangenen Meeresboden-Datensatzes ist; wobei die Cluster ohne irgendeine vorherige Kenntnis der Anzahl von unterschiedlichen Typen von Eingangsmustem gebildet worden sind; wobei die Cluster des Datensatzes darauffolgend zu der LVQ1 (21) eingegeben werden; wobei die Nichtperfektion in der Klassifizierung von dem Prozess eines nicht überwachten Lernens ohne irgendeine Hintergrundkenntnis entsteht, die teilweise durch das LVQ1-Netzwerk (21) beseitigt wird; wobei die Verbesserung in der Meeresboden-Klassifikation durch ein überwachtes Lernen, basierend auf der Rückführung, bereitgestellt zu dem LVQ1-Netzwerk (21), durch die Interpretation einer Person, basierend auf dem Grund-Wahrheits-Datensatz unter Verwendung eines geeigneten Gewichtungs-Aktualisierungs-Kriteriums, erreichbar ist, wobei ein korrekt darstellender Gewichtungsvektor so gestaltet worden ist, um den Eingang stärker anzupassen, während ein schlecht darstellender Gewichtungsvektor von dem Eingang weg bewegt worden ist, um so eine Fehlklassifikation an dem zentralen Bereich der Gewichtungs-Verteilung jedes Clusters zu vermeiden; wobei die Ausgänge des LVQ1 (21) darauffolgend zu dem Speicher- und Anzeigemodul (22) eingegeben werden, wobei die Ergebnisse **dadurch** angezeigt werden, die den Nutzen für eine Interpretation durch eine Person haben, um so vorgenommen zu werden, um die Qualität der Klassifikation zu erhöhen; wobei das System der vorliegenden Erfindung die Fähigkeit hat, ein alternierendes Hybrid-Layout einzusetzen, wobei das LVQ1-(21)-Modul durch ein anderes, überwachbares Modul LVQ2 (23) ersetzt werden könnte, das die alternierende Funktion eines Unterscheidens der überlappenden Enden der Gewichtungs-Verteilung von benachbarten Clustern durchführt, um eine Meeresboden-Klassifikation mit einem minimalen Fehler durchzuführen; wobei das System eine zusätzliche Fähigkeit hat, ein verbessertes Hybrid-Layout einzusetzen, wobei das Layout den Vorteil einer Ausführung einer Meeresboden-Klassifikation, basierend auf den unterschiedlichen Fähigkeiten der LVQ1 (21) und der LVQ2 (23), besitzt, um **dadurch** die beste, mögliche Klassifikation bereitzustellen, unter Berücksichtigung der zentralen ebenso wie der Endbereiche der Gewichtungs-Verteilung in dem Vorgang einer Klassifikation.

29. System nach Anspruch 1, wobei das Layout des neuralen Netzwerks ein modell-unabhängiges System ist, das die Fähigkeit bereitstellen würde, die unverarbeiteten Backscatter-Daten von dem Meeresboden für den Zweck einer Klassifikation zu verwenden.

30. System nach Anspruch 1, wobei eine Online-Meeresboden-Klassifikation auf die Trainingsphase des Netzwerks hin möglich ist, um **dadurch** ein kosteneffektives System bereitzustellen, das die Fähigkeit besitzt, das Erfordernis einer Vorverarbeitung der groben Daten zu umgehen.

31. System nach Anspruch 1, wobei eine eindimensionale (d.h. Balken-Ausdruck) Präsentation einer Vielzahl von selbst-organisierenden Clustern eines unverarbeiteten (d.h. rohen) Eingangsdatensatzes und einer darauffolgenden Klassifikation für die Interpretation einer Person für eine weitere Beurteilung der Qualität einer Klassifikation und eine zusätzliche Fähigkeit einer Visualisierung der empfangen Eingangsvektoren in einer Realzeit bereitgestellt wird.

32. System nach Anspruch 1, wobei die Fähigkeiten auf die verarbeiteten Backscatter-Daten ebenso erweiterbar sind.

33. System nach Anspruch 1, wobei das System dazu geeignet ist, in einer Realzeit Kursversatz-Mehrstrahl-Winkel-Backscatter-Daten, aufgenommen von einem Echolot, installiert außenbords des Schiffs/AUV, zu einer entfernten Datenbank umzuleiten.

34. System nach Anspruch 32, wobei die Umleitung durch eine Darstellung eines umfangreichen Datensatzes durch ein paar Cluster-Einheiten, wie sie in dem System-Layout auf einer Basis Ping für Ping gebildet ist, ausgeführt ist.

## Revendications

1. Système de classification de la rugosité du fond océanique utilisant une topologie hybride de réseaux neuronaux artificiels (ANN) à partir de données non traitées de rétrodiffusion multifaisceau, ledit système comprenant un moyen pour générer des données non traitées de moyenne quadratique de rétrodiffusion multifaisceau acoustique, connectées à l'entrée d'un préprocesseur de catégorisation automatique de données (20) (SOM self-organizing map preprocessor), ledit préprocesseur SOM étant connecté par l'intermédiaire d'un ou de plusieurs réseaux (21 et 23) de quantification vectorielle par apprentissage (LVQ Learning Vector Quantization) à un module de mémoire/affichage (22).

2. Système selon la revendication 1, dans lequel le dispositif pour générer les données non traitées de moyenne quadratique de rétrodiffusion multifaisceau comprend un dispositif acoustique multifaisceau, monté sous la coque d'un navire, et connecté à un module estimateur de moyenne quadratique par l'intermédiaire d'un module formateur de faisceaux.

3. Système selon la revendication 2, dans lequel le dispositif acoustique multifaisceau comprend un réseau rectiligne de transducteurs connecté à un capteur de roulis-tangage-pilonnement par l'intermédiaire de boîtes de connexion pour câbles et d'un réseau de systèmes d'émission-réception.

4. Système selon la revendication 3, dans lequel le dispositif acoustique multifaisceau comprend deux réseaux identiques de transducteurs acoustiques montés perpendiculairement les uns aux autres.

5. Système selon la revendication 4, dans lequel chaque réseau de transducteurs acoustiques est constitué d'une combinaison de divers sous-réseaux, chaque sous-réseau consistant en une multitude d'éléments.

6. Système selon la revendication 5, dans lequel chaque élément forme un jeu de canaux.

7. Système selon la revendication 7, dans lequel les réseaux peuvent être utilisés pour l'émission ou pour la réception de signaux.

8. Système selon la revendication 2, dans lequel le dispositif acoustique multifaisceau est connecté à un module formateur de faisceaux en passant par un préamplificateur et un circuit de réglage de gain variable avec le temps.

9. Système selon la revendication 2, dans lequel la formation de faisceaux se fait par l'emploi de délais appropriés.

10. Système selon la revendication 2, dans lequel le module formateur de faisceaux est connecté au module estimateur de moyenne quadratique par l'intermédiaire d'un convertisseur numérique analogique, d'un filtre et d'un convertisseur analogique numérique.

11. Système selon revendication 10, dans lequel un dispositif d'affichage est facultativement connecté au convertisseur analogique numérique.

12. Système selon la revendication 11, dans lequel un dispositif d'affichage est connecté au convertisseur analogique numérique par une porte de poursuite de fond.

13. Système selon la revendication 1, dans lequel la configuration de sortie du module estimateur de moyenne quadratique est l'enveloppe de l'amplitude du signal de moyenne quadratique par rapport au nombre de faisceaux en direction transversale au sillage.

14. Système selon la revendication 1, dans lequel le préprocesseur de catégorisation automatique de données (SOM self-organizing map preprocessor) classifie les données du fond océanique en divers types de rugosité et les regroupe.

15. Système selon la revendication 14, dans lequel les paramètres de rugosité sont différenciés sur base du paramètre de forme de rétrodiffusion de signaux multifaisceau angulaire transversale au sillage du navire.

16. Système selon la revendication 14, dans lequel chaque groupe formé représente une configuration unique des données d'entrée.

17. Système selon la revendication 14, dans lequel le nombre de groupes ainsi formé est égal au nombre des configurations différentes des jeux de données en provenance du fond océanique.

18. Système selon la revendication 14, dans lequel les groupes sont formés avec la caractéristique d'apprentissage non supervisé inhérente au préprocesseur SOM.

19. Système selon la revendication 14, dans lequel les groupes sont formés sans aucune connaissance préalable du nombre de types différents de configurations d'entrée.

20. Système selon la revendication 1, dans lequel la variante de la quantification vectorielle par apprentissage (LVQ Learning Vector Quantization) surmonte l'imperfection de classification résultant du traitement de classification non supervisée réalisée par le préprocesseur SOM.

21. Système selon la revendication 20, dans lequel l'amélioration de la classification de données de fond océanique est réalisée par un apprentissage supervisé.

22. Système selon la revendication 21, dans lequel l'apprentissage supervisé est transmis à la LVQ par un interprète humain sur base du jeu réel de données au sol.

23. Système selon la revendication 1, dans lequel ledit système incorpore une LVQ conçue pour éviter une fausse classification à la partie centrale de la distribution pondérale de chaque groupe ou une LVQ conçue pour distinguer les queux se chevauchant de la distribution pondérale des groupes adjacents ou une combinaison des deux.

24. Système selon la revendication 23, dans lequel la LVQ conçue pour éviter une classification erronée de la portion centrale est basée sur le critère de « récompense-punition ».

25. Système selon la revendication 24, dans lequel la LVQ éloigne le vecteur pondéral de l'entrée, s'il est représenté de façon erronée, et le rapproche de l'entrée s'il est représenté correctement.

26. Système selon la revendication 23, dans lequel la LVQ conçue pour distinguer le chevauchement des queues de distribution, emploie la technique de redistribution des poids de la partie de chevauchement des groupes adjacents aux groupes-mères respectifs.

27. Système selon la revendication 1, dans lequel un interprète humain peut utiliser les résultats apparaissant sur le dispositif d'affichage afin de se faire une meilleure opinion de la qualité de la classification.

28. Système selon la revendication 1, dans lequel la topologie hybride des réseaux neuronaux artificiels est constituée du préprocesseur SOM de catégorisation automatique des données (20), des variantes de quantification vectorielle par apprentissage LVQ1 (21) et LVQ2 (23), et du module de mémoire/affichage (22), dans lequel l'entrée dudit réseau SOM (20) est dérivé d'une sortie d'un module estimateur de moyenne quadratique (19), qui a reçu son signal d'entrée d'un convertisseur analogique numérique (16), qui a reçu à son tour son signal d'entrée d'un module formateur de faisceaux (13) connecté à deux réseaux identiques orientés perpendiculairement (7) et (8) d'un dispositif acoustique multifaisceau, ledit signal après avoir été converti en analogique et filtré par l'emploi des circuits électroniques appropriés (14) et (15) respectivement ; ledit réseau SOM (20) recevant les données non traitées de moyenne quadratique de rétrodiffusion multifaisceau, provenant de plusieurs faisceaux préformés, et classifiant les données de fond océanique selon les différents types de rugosité **caractérisés** sur base du paramètre de forme de rétrodiffusion de signaux multifaisceau angulaire transversale au sillage du navire, dans lequel un groupe unique de données est formé afin de représenter une configuration spécifique des données d'entrée ; le nombre de groupes ainsi formé étant égal au nombre de configurations différentes du jeu reçu de données du fond océanique ; lesdits groupes ayant été formés sans aucune connaissance préalable du nombre de types différents de configurations d'entrée ; lesdits groupes du jeu de données formant ensuite l'entrée de la LVQ1 (21) ; l'imperfection de classification provenant du processus d'apprentissage non supervisé sans aucune connaissance préalable étant partiellement surmontée par le réseau LVQ1 (21) ; ladite amélioration de classification de données de fond océanique pouvant être obtenue par un apprentissage supervisé basé sur le renvoi par l'interprète humain d'informations audit réseau LVQ1, sur base du jeu des données réelles au sol, en employant un critère approprié d'actualisation des poids, un vecteur pondéral de représentation correcte ayant été fait pour se rapprocher davantage de l'entrée, tandis qu'un vecteur pondéral de représentation erronée a été éloigné de l'entrée, afin d'éviter une classification erronée dans la partie centrale de la distribution pondérale de chaque groupe ; les sorties de ladite LVQ1 (21) formant ensuite l'entrée du module de mémoire/affichage (22), où les résultats ainsi rendus visibles à l'écran sont utiles pour l'interprétation humaine afin d'améliorer la qualité de la classification ; le système de la présente invention ayant l'aptitude à incorporer une variante de topologie hybride dans laquelle le module LVQ1 (21) pourrait être remplacé par un autre module de surveillance LVQ2 (23) supervisable qui réalise la fonction alternative de distinguer les queux se chevauchant de la distribution pondérale de groupes adjacentes afin de réaliser la classification du sol océanique avec une erreur minimale ; ledit système présentant l'aptitude supplémentaire à incorporer une topologie hybride améliorée, ladite topologie présentant l'avantage de réaliser la classification du sol océanique basée sur les aptitudes différentes de la LVQ1 (21) et de la LVQ2 (23), ce qui conduit ainsi à la meilleure classification possible, en tenant compte aussi bien de la partie centrale que des parties d'extrémité des distributions pondérales dans le processus de classification.

29. Système selon la revendication 1, dans lequel la topologie de réseaux neuronaux est un système indépendant d'un modèle qui donnerait l'aptitude à employer des données non traitées de rétrodiffusion provenant du fond océanique dans un but de classification.

30. Système selon la revendication 1, dans lequel la classification de fond océanique est possible suite à la phase d'apprentissage du réseau, ce qui conduit ainsi à un système économiquement avantageux ayant l'aptitude à contourner le besoin de prétraiter les données brutes.

31. Système selon la revendication 1, dans lequel une représentation unidimensionnelle (c'est à dire un tracé de traits) d'une multitude de groupes auto-organisés d'un jeu de données d'entrée non traitées (c'est à dire des données brutes) et une classification consécutive sont fournies à l'interprète humain pour se faire une meilleure opinion de la qualité de la classification, et une aptitude supplémentaire à visualiser en temps réel les vecteurs d'entrée reçus.

32. Système selon la revendication 1, dans lequel lesdites aptitudes sont extensibles également aux données de rétrodiffusion traitées.

33. Système selon la revendication 1, dans lequel ledit système est capable de rediriger en temps réel les données de rétrodiffusion multifaisceau angulaire transversale au sillage, reçues par l'échosondeur installé à bord du navire/véhicule sous-marin autonome AUV, vers une banque de données éloignée.

34. Système selon la revendication 32, dans lequel ladite redirection est réalisée par la représentation d'un vaste jeu de données par quelques unités de groupage telles que formées dans ladite topologie de système sur une base écho par écho.
